(19) Europäisches Patentamt

European Patent Office

Office européen des brevets

(11) Veröffentlichungsnummer : **0 362 621 B1**

(12) **EUROPÄISCHE PATENTSCHRIFT**

(45) Veröffentlichungstag der Patentschrift :
**31.08.94 Patentblatt 94/35**

(51) Int. Cl.⁵ : **G02B 6/44**

(21) Anmeldenummer : **89117417.9**

(22) Anmeldetag : **20.09.89**

(54) **Verfahren und Einrichtung zur Herstellung eines optischen Kabels.**

(30) Priorität : **07.10.88 DE 3834219**
**03.02.89 DE 3903283**

(43) Veröffentlichungstag der Anmeldung :
**11.04.90 Patentblatt 90/15**

(45) Bekanntmachung des Hinweises auf die
Patenterteilung :
**31.08.94 Patentblatt 94/35**

(84) Benannte Vertragsstaaten :
**AT BE CH DE FR GB IT LI NL SE**

(56) Entgegenhaltungen :
**EP-A- 0 170 491**
**EP-A- 0 171 841**
**DE-A- 2 922 986**
**FR-A- 2 549 241**
**GB-A- 2 186 520**

(73) Patentinhaber : **SIEMENS
AKTIENGESELLSCHAFT
Wittelsbacherplatz 2
D-80333 München (DE)**

(72) Erfinder : **Oestreich, Ulrich, Dipl.-Ing.
Karl-Witthalmstrasse 15
D-8000 München 70 (DE)**

## Beschreibung

Die Erfindung betrifft ein Verfahren zur Herstellung eines optischen Kabels, wobei ein Tragkörper mittels eines Extruders auf ein zugfestes Element aufgebracht und dabei der Tragkörper mit wendelförmig in wechselnder Richtung mit einem bestimmten Umkehrstellenabstand verlaufenden nach außen offenen Kammern versehen wird und anschließend in diese Kammern an einer Einlegestelle Lichtwellenleiter eingelegt werden.

Aus der DE-OS 29 22 986 ist es bekannt, die auf dem Trägerkörper angebrachten, wendelförmig verlaufenden Kammern mit wechselnder Umlaufrichtung aufzubringen, so daß diese einen bestimmten Umkehrstellenabstand aufweisen (ähnlich der bekannten SZ-Verseilung). Im einzelnen wird dabei so vorgegangen, daß eine feststehende Extrudiereinheit vorgesehen ist, welcher in einem bestimmten Abstand nach einer Zwischenkühlung eine Verdrilleinheit nachfolgt. Diese Verdrilleinheit hat die Aufgabe, auf den fertigen, bereits mit den Kammern versehenen Trägerkörper eine Torsion auszuüben, derart, daß die Wirkung dieser Torsion rückwärts bis zum Extruderkopf der Extrudiereinheit reicht und dort eine oszillierende Bewegung des durch den Extruderkopf hindurchlaufenden zugfesten Elementes bewirkt. Auf diese Weise werden bei feststehendem Extruderkopf die wendelförmig abwechselnd in unterschiedlichen Richtungen verlaufenden Kammern erzeugt. Nach der Verdrilleinheit ist eine Einlegeeinheit vorgesehen, welche mit zwei oszillierenden Einlegescheiben für die Lichtwellenleiter arbeitet.

Der Nachteil dieser Anordnung besteht neben dem Aufwand für die Einlegescheiben vor allem darin, daß eine Steuerungs- und Führungseinrichtung benötigt wird, um den Synchronismus der Einlegescheiben zu gewährleisten. Die Ursache hierfür liegt darin, daß der Drehwinkel des Zentralelementes von der Dreheinheit aus mit zunehmendem Abstand ständig kleiner wird, so daß die Kopplung von Kammerherstellung und Elementeinlegen nicht möglich ist.

Aus der EP-A1 0 171 841 ist ein Herstellungsverfahren für ein Kammerkabel bekannt, bei dem die Verdrillung des zugfesten Elementes vor dem Extruder vorgenommen wird derart, daß diese so erzwungene Torsionsbewegung auch noch am eigentlichen Extruderkopf merkbar ist. Da die Verdrillung in periodisch wechselnder Richtung erfolgt, ergeben sich am Ausgang des Extruderkopfes wendelförmige, jeweils abwechselnd in unterschiedliche Richtungen verlaufende Kammern. Auch hier nimmt die Elementdrehung von der Dreheinrichtung bis zur Einlegevorrichtung ab, so daß letztere unabhängig gesteuert werden muß. Der Einlegevorgang wird so durchgeführt, daß eine rotierende Einlegevorrichtung vorgesehen ist, welche an ihrem Ausgang Führungsröhrchen für das Einleiten der Lichtwellenleiter in die Kammern des Trägerkörpers aufweist. Auch hier muß die Rotation der Einlegeeinrichtung dem Verlauf der Kammern folgen, das heißt es müssen entsprechende Steuerungs- und Führungseinrichtungen vorgesehen werden.

Der vorliegenden Erfindung liegt die Aufgabe zugrunde, das Einlegen der Lichtwellenleiter in die Kammern in möglichst einfacher und zuverlässiger Weise durchzuführen. Gemäß der Erfindung wird dies bei einem Verfahren der eingangs genannten Art dadurch erreicht, daß eine synchrone Drehung um die Längsachse sowohl des zugfesten Elements vor dem Extruder als auch des Tragkörpers nach der Einlegestelle durchgeführt wird und daß die Lichtwellenleiter dort eingelegt werden, wo vom Ausgang des Extruders gerechnet der Abstand bis zur Einlegestelle der Lichtwellenleiter etwa ein geradzahliges Vielfaches des Umkehrstellenabstandes beträgt, so daß das Einlegen der Lichtwellenleiter in einem torsionsfreien Bereich erfolgt.

Auf diese Weise ist der Einlegevorgang für die Lichtwellenleiter synchron zur Herstellung der wendelförmigen Kammern organisiert, das heißt die Richtungsumkehr am Extruder und an der Einlegestelle erfolgen jeweils zur gleichen Zeit. Rotierende Einlegescheiben und zugehörige Steuerungs- und Führungseinrichtungen können entfallen, weil allein durch die Abstandswahl und die synchrone Drehung der beiden Dreheinrichtungen (Twister) eine ruhende Position der Einlegevorrichtung möglich ist. Es ist lediglich erforderlich, die Einlegekanäle auf den Richtungsverlauf der Kammern einzustellen.

Die bei gleichzeitigem Fortschritt (Abzug) des Elementes erzeugten Kammern mit Umkehrstellen werden zweckmäßig gekühlt und ggf. nach Entfernen der Feuchtigkeitsreste (eines flüssigen Kühlmittels) mit den Lichtwellenleitern beschickt. Der Längstransport kann entweder durch einen weit entfernten Abzug stattfinden, der an der Drehung nicht teilnimmt, oder durch die Dreheinrichtungen (Twister) selbst, wenn diese schnell umsteuerbare Raupen sind.

Durch Anbringen mehrerer stehender oder mitrotierender Dreheinrichtungen (Twister) ist es möglich, die Torsion des Zentralelementes vor dem ersten Twister und/oder des fertig beschickten Kammerelementes nach dem zweiten Twister auf definierte Teile der Linie zu beschränken.

Die Erfindung betrifft weiterhin eine Einrichtung zur Durchführung des erfindungsgemäßen Verfahrens, welche dadurch gekennzeichnet ist, daß eine erste Dreheinrichtung vor dem Extruder und eine zweite Dreheinrichtung nach dem Extruder angeordnet ist und daß der Abstand der Einlegestelle der Lichtwellenleiter vom Extruder gleich einem geradzahligen Vielfachen des Umkehrstellen-Abstandes der Kammern des Trägerkörpers gewählt ist und daß für das Einlegen der Lichtwellenleiter eine feststehende Einlegevorrichtung vorge-

EP 0 362 621 B1

sehen ist.

Die Erfindung und ihre Weiterbildungen werden nachfolgend anhand von Zeichnungen näher erläutert. Es zeigen:

Fig. 1       in schematischer Darstellung die Gesamtanordnung einer Einrichtung zur Durchführung des erfindungsgemäßen Verfahrens

Fig. 2       in vergrößerter Darstellung einen Ausschnitt aus Figur 1.

Fig. 3 und Fig. 4       die Drehzahl und den Drehwinkel in Abhängigkeit von der Zeit

Fig. 5       einen geänderten Drehzahlverlauf in Abhängigkeit von der Zeit und

Fig. 6       eine Einrichtung zur Erreichung des Drehzahlverhaltens nach Fig. 5.

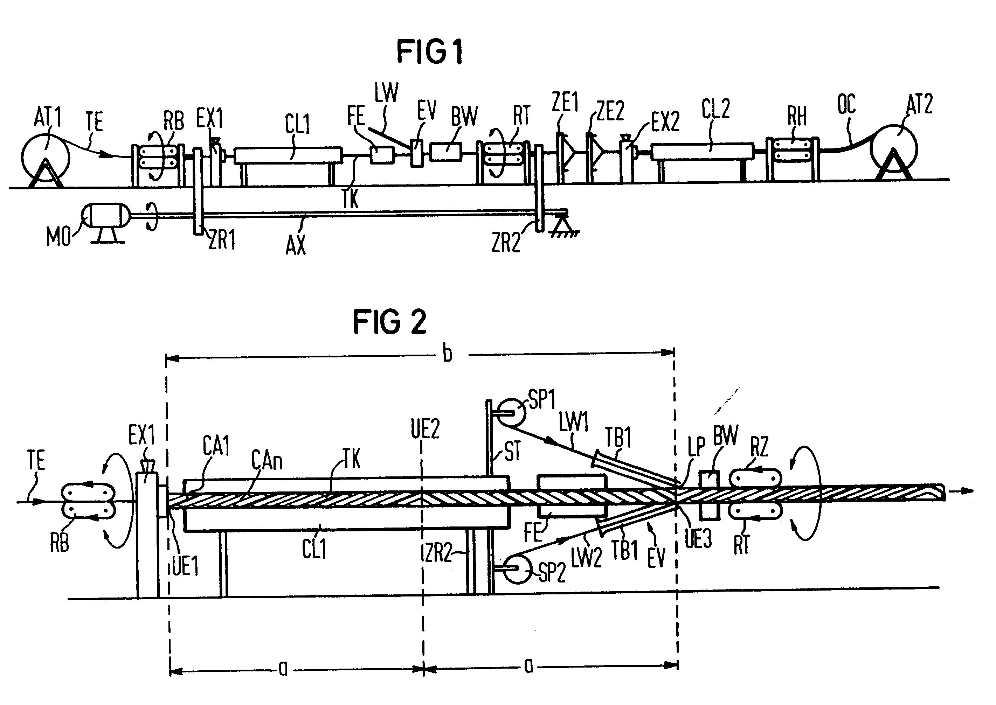

In Figur 1 ist auf einer in Längsrichtung drehbar gelagerten, jedoch mit feststehender Achse versehenen Abwickeltrommel AT1 ein zugfestes Kernelement TE angeordnet, welches vorzugsweise aus Stahldrähten oder hochzugfesten Kunststoffen (zum Beispiel Aramidgarnen) aufgebaut ist. Dieses zugfeste Element wird einer den Längstransport bewirkenden Abzugseinheit zugeführt, welche im vorliegenden Beispiel aus einer angetriebenen Doppelraupe RB (Raupenabzug) besteht, d.h. aus zwei gegensinnig umlaufenden Bändern, zwischen denen das zugfeste Element TE verläuft. Hierfür können jedoch auch Räder oder ähnliche Einrichtungen verwendet werden. Auf die Abzugseinheit in Form der Raupe RB folgt ein Extruder EX1, durch den auf das zugfeste Element TE eine Kunststoffumhüllung aufgebracht wird, welche mit wendelförmig verlaufenden Kammern versehen ist, welche der Aufnahme von Lichtwellenleitern dienen. Das Kunststoffmaterial des so gebildeten Trägerkörpers TK durchläuft eine Kühleinrichtung CL1, an die sich eine Fülleinrichtung FE anschließen kann, welche den Zweck hat, die Kammern des Trägerkörpers TK ganz oder teilweise mit einer weichen Füllmasse zu versehen, in die später die Lichtwellenleiter eingebettet werden und welche die Aufgabe hat, die Lichtwellenleiter vor unnötigen Zugspannungen zu schützen und gleichzeitig die Längswasserdichtigkeit des Kabels zu gewährleisten. Anschließend wird mittels einer Einlegevorrichtung EV mindestens ein Lichtwellenleiter LW in jede beschickte Kammer des Trägerkörpers TK eingebracht, wobei anstelle einzelner Lichtwellenleiter auch Lichtwellenleiterbändchen oder Stapel von Lichtwellenleitern eingelegt werden können. Die nach außen offenen Kammern des Trägerkörpers TK werden anschließend durch einen Bandwickler BW verschlossen, durch den ein- oder mehrlagig ein Band um den Trägerkörper außen herum gewickelt wird, gegebenenfalls auch im Gegenschlag. An die Stelle des Bandwicklers kann ein Extruder treten, der eine abschließende Hülle aufbringt. Anschließend ist eine weitere Zugeinrichtung vorgesehen, welche hier ebenfalls in Form einer angetriebenen Doppelraupe ausgebildet und mit RT bezeichnet ist. Es kann eine Wickeleinrichtung ZE1 folgen, welche Zugelemente außen auf den Trägerkörper TK aufwickelt. Im vorliegenden Beispiel ist noch eine zweite derartige Wickeleinrichtung vorgesehen und mit ZE2 bezeichnet, wobei diese im Gegenschlag zur ersten Wickeleinrichtung ZE1 betrieben wird. Für die Aufbringung des Außenmantels ist ein Mantelextruder EX2 auf den eine weitere Kühlstrecke CL2 folgt, an deren Ausgang eine weitere Abzugseinrichtung, hier ebenfalls in Form einer Doppelraupe ausgebildet und mit RH bezeichnet angeordnet ist. Das so erhaltene fertige optische Kabel OC wird auf eine drehbar gelagerte jedoch räumlich feststehende Aufwickeltrommel AT2 aufgewickelt.

Wenn gewünscht ist, daß die Kammern im Trägerkörper TK jeweils wendelförmig jedoch in wechselnder Umlaufrichtung verlaufen, dann müssen besondere Maßnahmen getroffen werden, um dies sicherzustellen. Im einzelnen wird dabei im vorliegenden Ausführungsbeispiel so vorgegangen, daß die beiden Abzugseinrichtungen RP und RT synchron und mit wechselnden Drehrichtungen um ihre Längsachse rotiert werden. Hierzu kann z.B. ein Motor MO vorgesehen sein, der über eine Antriebswelle AX die beiden Raupen RP und RT zum Beispiel mittels Zahnriemen ZR1 und ZR2 in Rotation versetzt und zwar jeweils um eine Rotationsachse, die mit der Längsachse des zugfesten Elementes TE bzw. des Trägerkörpers TK zusammenfällt. Dabei werden zweckmäßig mehrere, vorzugsweise mindestens jeweils zwei bis acht Umdrehungen um die Längsachse (Kabelachse) durchgeführt, bevor eine Richtungsumkehr erfolgt, und anschließend wird die Drehung mit der gleichen Anzahl von Umdrehungen in der Gegenrichtung vorgenommen usw. Die Twister (Verdreheinrichtungen) können auch einzeln angetrieben werden, wobei die Synchronität der Bewegungen sichergestellt bleiben muß. Das zugfeste Element TE wird von der Raupe RP und der Trägerkörper TK von der Raupe RT gehalten und zwar unter einer gewissen Zugspannung, so daß ein geradliniger Durchlauf durch den Extruder EX1 erfolgt. Infolge der synchronen Drehung der beiden Verdreheinrichtungen RB und RT ist so wohl das zugfeste Element TE als auch der Trägerkörper TK im Bereich vom Ausgang der Raupe RP bis zum Eingang der Raupe RT torsionsfrei, das heißt die Aufextrudierung des Kunststoffmaterials und die Bildung der Kammern erfolgt ohne daß eine Torsionsspannung im Bereich des Extruderkopfes des Extruders EX1 auftritt. Ebenso erfolgt das Einlegen der Lichtwellenleiter LW in einem Bereich, wo keine Torsionsspannungen vorhanden sind. Andererseits bildet sich durch die alternierende Rotation des Twisters RB eine Torsion des zugfesten Elementes TE im Bereich zwischen der Ablauftrommel AT1 und der Raupe RB aus. Diese Torsion ist in diesem Bereich bei entsprechender Länge des zugfesten Elementes TE unkritisch, wobei auch zu beachten ist, daß das wegen des priodischen Wechsels der Drehrichtungen die Summentorsion sich gegenseitig aufhebt, so daß diesbezüglich kein Aufschaukeln auftritt. Durch Vergrößerung des Abstandes zwischen der Ablauftrommel AF und dem Twisters RB oder durch Aufbringen eines weiteren vorgeschalteten synchronen Abzug bzw. Twisters (hier nicht dargestellt) ist eine eventuelle Rückwirkung jederzeit zu beseitigen.

Im Bereich nach dem Ausgang der zweiten Abzugeinrichtung RT bis zum Erreichen der Aufwickeltrommel AT2 tritt ebenfalls eine periodisch wechselnde Torsion auf, die sich jedoch in der Summe ebenfalls kompensiert und nicht aufschaukelt. Um aber sicher zu gehen, daß auch keine Reste dieser alternierenden Torsionsvorgänge mit auf die Aufwickeltrommel AT2 gelangen, ist der weitere Hilfsabzug RH vorgesehen und so ausgebildet, daß er etwaige Torsionsspannungen nicht bis zur Aufwickeltrommel AT gelangen läßt, das heißt die als End- und Hilfsabzug dienende Raupe RH ist ortsfest (d.h. nicht um die Kabellängsachse rotierend) angeordnet und so lang ausgebildet, daß Torsionen, welche von der alternierenden Rotation der Raupe RT auf das optische Kabel OC ausgeübt werden, nicht bis zum Ausgang der Raupe RH gelangen können. Auch hier nimmt jede Drehung mit zunehmendem Abstand der Aufwickeltrommel AT2 ab.

Im vorliegenden Beispiel haben die Elemente RB und RT eine Doppelfunktion, d.h. sie arbeiten sowohl als Abzugeinrichtungen als auch als Dreheinrichtungen (Twister). Die Abzugsfunktion dieser Elemente kann ggf. ganz oder teilweise entfallen oder durch andere Elemente übernommen werden. Bleiben muß dagegen die Funktion als Dreheinrichtung, d.h. vor dem Extruder EX1 und nach der Einlegestelle im Bereich einer Einführungsvorrichtung EV für die Lichtwellenleiter LW muß mindestens je eine gleichsinnige und synchrone Verdrehung (Twisting) des zugfesten Elements TE bzw. des Kernelementes TK erfolgen.

In Figur 2 sind Einzelheiten der Einrichtung nach Figur 1 in vergrößerter Darstellung gezeichnet, und zwar der Bereich zwischen dem Twister RB und dem Twister RT. Wie aus der vergrößerten Darstellung des Trägerkörpers TK ersichtlich ist, weist dieser eine Reihe von wendelförmig und jeweils untereinander parallel verlaufenden Kammern CA1 - CAn auf, wobei zur Verdeutlichung die Kammer CA1 mit stärkeren Linien dargestellt ist. Im vorliegenden Beispiel ist angenommen, daß jeweils nach dreieinhalb vollen wendelförmigen Umschlingungen des Trägerkörpers durch die Kammern CA1 - CAn eine Umkehr der Drehrichtung erfolgt. Entsprechend der Darstellung in Figur 2 ist die erste Umkehrstelle UE1 gerade im Bereich des Extruderkopfes des Extruders EX1 vorhanden, während die zweite Umkehrstelle UE2 dreieinhalb "Schläge" dahinter folgt und die dritte Umkehrstelle UE 3 nach weiteren dreieinhalb Schlägen zu finden ist. Wie aus der Zeichnung ersichtlich ist tritt im Bereich der Umkehrstelle UE3 der gleiche Verlauf in der Richtung der Kammer CA1 auf wie im Bereich des Extruders EX1. Allgemein ausgedrückt ist der gleiche Verlauf jeweils dann gegeben, wenn eine Umkehrstelle ein geradzahliges Vielfaches des Umkehrstellenabstandes a vom Extruder EX1 entfernt liegt, das heißt der entsprechende Abstand b ist definiert durch die Gleichung

$b = 2ka$ mit k = 1, 2, 3 ... ganze Zahl.

Der Einlegevorgang für die Lichtwellenleiter ist dann und nur dann einfach durchzuführen, wenn beim Extruder EX1 und bei der Einlegestelle LP für die Lichtwellenleiter der auch richtungsmäßig gleiche Verlauf der Kammern CA1 - CAn aufscheint, d.h. wenn der Abstand der Einlegestelle LP der Lichtwellenleiter so gewählt ist, daß dieser ein geradzahliges Vielfaches des Umkehrstellenabstandes a beträgt.

Im vorliegenden Beispiel ist dargestellt, wie zwei Lichtwellenleiter LW1 und LW2 von entsprechenden Vorratsspulen SP1, SP2 abgezogen werden, wobei die Vorratsspulen SP1 und SP2 raumfest an einem Ständergestell ST angeordnet sind. Letzteres ist von besonderem Vorteil bei der Herstellung großer Kabellängen, weil dann der Fertigungsprozeß zum Anschluß einer neuen Kabelspule nicht eigens unterbrochen werden muß. Die Lichtwellenleiter LW1 und LW2 laufen in Führungsrohre TB1 und TB2 ein, wobei diese quer zu ihrer Längsachse schwenkbar gelagert sind. Diese Führungsrohre TB1 und TB2 sind so dimensioniert, daß ihre Führungsnasen gerade in die jeweiligen Kammern CA1 - CAn passen und von diesen geführt werden, wobei die Führungsfunktion sich auf das Einstellen in Nut-(Kammer-)-Richtung beschränkt. Dies kann dadurch geschehen, daß die Enden der Führungsrohre TB1 und TB2 an den Kammerwandungen oder den Rändern der jeweiligen Kammern anliegen. Durch diese einfache Verschwenkbarkeit quer zur Längsachse der Führungsrohre TB1 und TB2 ist sichergestellt, daß das jeweilige Führungsrohr sich tangential an den Verlauf der zugehörigen Kammer anpaßt. Für jede der Kammer CA1 - CAn ist ein eigenes Führungsrohr vorgesehen, deren Öffnungen alle in der gleichen, quer zur Kabellängsachse verlaufenden Ebene liegen. Die Einführvorrichtung EV für die Lichtwellenleiter LW1 und LW2 ist also insgesamt feststehend ausgebildet und lediglich die leichte Schwenkbarkeit der Führungsrohre TB1 und TB2 quer zu deren Längsachse genügt im Sinn einer Tangentialeinführung für die Eingabe der Lichtwellenleiter im Einlegebereich LP.

Wie bei jeder Drehung (Twistung) eines längeren Gegenstandes wird der Drehvorgang durch ein mit zunehmendem Drehwinkel größer werdendes Gegenmoment beeinflußt. Der Drehwinkel je Längeneinheit strebt daher nach einem Umkehrpunkt von einem Höchstwert - etwa einer Exponentialfunktion folgend - dem Endwinkel Null zu. Letzterer kann nur dadurch vermieden werden, daß die Drehrichtung rechtzeitig gewechselt wird. Trotzdem bleibt in jedem Fall eine gewisse Variation der Schlaglänge übrig, die zwar den Einlegevorgang für die Lichtwellenleiter nicht behindert, jedoch bei sehr strengen Anforderungen gegebenenfalls als uner-

4

wünscht für die Nutzung des Produktes angesehen werden kann.

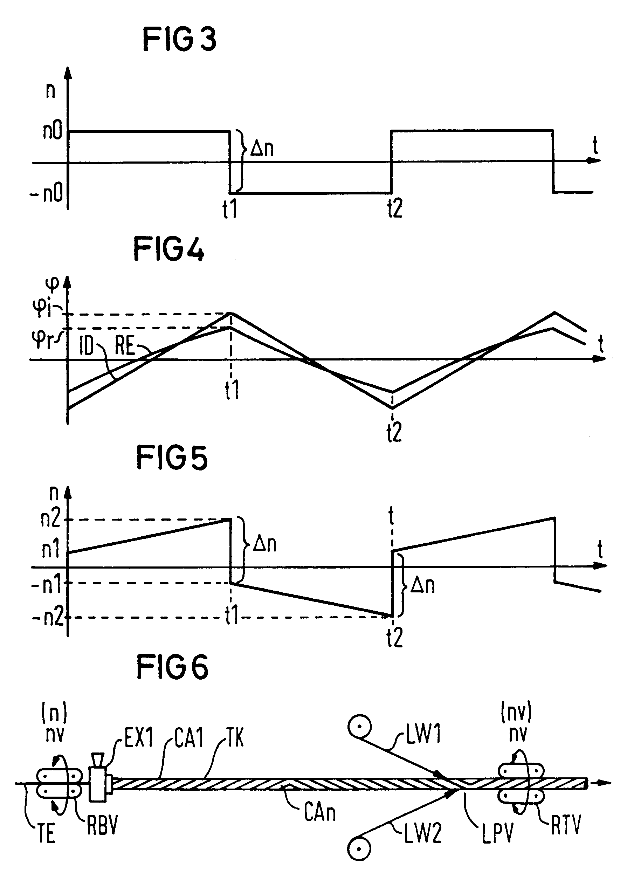

Zur Erläuterung der Verhältnisse wird zunächst auf Figur 3 und 4 Bezug genommen, wo die Drehzahl n in Abhängigkeit von der Zeit t dargestellt ist. Die Dreheinrichtungen (Twister) werden demnach mit gleichbleibenden Drehzahlen n0 und - n0 betrieben, wobei im Bereich der Umkehrstellen ein Drehzahlsprung $\Delta n = 2n0$ auftritt.

In Figur 4 ist in Abhängigkeit von der Zeit t der Drehwinkel $\phi$ dargestellt, welcher durch die Einwirkung der Dreheinrichtungen auf die Kabel bewirkt wird. Qualitativ ergibt sich dabei eine etwa sägezahnförmig verlaufende Kurve, wobei der mit ID bezeichnete Kurvenverlauf demjenigen entspricht, wie er ohne das Gegenmoment des Kabelkerns auftreten würde. Wegen des mit zunehmendem Drehwinkel größer werdenden Gegenmoments ergibt sich jedoch in der Praxis eine etwas flacher verlaufende Sägezahnkurve, die mit RE bezeichnet ist.

Falls erwünscht, kann durch zusätzliche Maßnahmen der tatsächliche Verlauf des Drehwinkels in Abhängigkeit von der Zeit weitgehend an den idealen Kurvenverlauf ID angenähert werden.

Erfindungsgemäß wird diese Aufgabe bei einem Verfahren der eingangs genannten Art dadurch gelöst, daß die Drehung um die Längsachse innerhalb einer Drehrichtung mit sich ändernder Drehzahl vorgenommen wird und daß der Drehzahlsprung für jede Drehrichtungsänderung konstant gehalten wird.

Der hierfür notwendige Verlauf der Drehzahlen n ist in einem Ausführungsbeispiel zur näheren Erläuterung in Figur 5 in Abhängigkeit von der Zeit t dargestellt. Im Gegensatz zu Figur 1 ist die Drehzahl innerhalb einer Drehrichtung nicht mehr konstant, sondern wechselt zwischen einem kleinsten Wert n1 und einem größten Wert n2 derart, was sich als Mittelwert aus $(n1 + n2)/2 = n0$ ergibt. In Figur 5 steigt die Drehzahl innerhalb der ersten Drehrichtung zunächst von n1 auf n2 an, wobei der anschließende Drehzahlsprung so vorgenommen wird, daß die Drehzahldifferenz $\Delta n$ konstant bleibt, was dadurch erreicht wird, daß die nächste Drehrichtung bei - n1 beginnt und bei - n2 endet usw. Bezüglich des Drehwinkels hat dies zur Folge, daß im Zeitpunkt t1 der ersten Drehrichtungsumkehr durch die gegenüber n0 vergrößerte Drehzahl n2 eine Art "Überdrehen" oder "Übertorsion" des Kabelelementes durchgeführt wird, wodurch die tatsächliche Kurve RE nach Figur 4 in Richtung auf die Kurve ID also die ideale Kurve verschoben wird.

Allgemein gilt für den Drehzahlsprung $\Delta n$ die Beziehung

$$\Delta n = |n1| + |n2|,$$

wobei davon ausgegangen ist, daß innerhalb jeder Drehrichtung die Veränderung der Drehzahl in gleicher Richtung erfolgt. Im vorliegenden Beispiel ist angenommen, daß eine fortlaufende Erhöhung der Drehzahl stattfindet.

Die Änderung der Drehzahl innerhalb einer Drehrichtung muß so vorgenommen werden, daß die Differenz zwischen den Drehwinkeln $\phi i$ (ideal) und $\phi r$ (real) nach Figur 4 möglichst beseitigt wird. Zwar handelt es sich eigentlich um einen exponentiellen Verlauf, der aber in guter Näherung im betrachteten Bereich als linear angenommen werden kann.

In Figur 6 ist in schematischer Darstellung zur Erläuterung eine Einrichtung dargestellt, mit der das erfindungsgemäße Verfahren durchgeführt werden kann. Das zugfeste Kernelement TE läuft in eine erste Dreheinrichtung (Twister) RBV ein, welche durch einen hier nicht näher dargestellten Antriebsmotor um ihre Längsachse rotiert wird und dabei das zugfeste Kernelement TE tordiert. Unmittelbar danach ist ein Extruder EX1 angeordnet, durch den der mit Kammern CA1 - CAn versehene Trägerkörper TK hergestellt wird. An der Einlegestelle LPV werden die Lichtwellenleiter LW1 - LWn zugeführt, wobei schematisch nur die beiden Lichtwellenleiter LW1 und LW2 gezeichnet sind. In einer unmittelbar nachfolgenden zweiten Dreheinrichtung (Twister) RTV wird eine Torsion in der gleichen Richtung und synchron zur Twistung mit der Dreheinrichtung RBV vorgenommen. Die beiden Dreheinrichtungen RBV und RTV werden also mit der in Figur 5 dargestellten Gesetzmäßigkeit der Drehzahl synchron betrieben, was durch die Drehzahlangabe nv angedeutet wird. Es ergeben sich dann die im Zusammenhang mit Figur 4 und 5 angedeuteten Kompensationen der Drehwinkelfehler.

Im einfachsten Fall erfolgt die Variation der Drehzahl nach einer, wie in Figur 5 dargestellt, linearen Gesetzmäßigkeit. Es ist jedoch auch möglich, nichtlineare Variationen der Drehzahl vorzusehen, wobei immer vorausgesetzt werden muß, daß der Drehzahlsprung $\Delta n$ in seiner Größe erhalten bleibt.

Es ist auch möglich so zu verfahren, daß eine der Dreheinrichtungen, zum Beispiel die Dreheinrichtung RBV wie in Klammer angedeutet, mit dem Drehzahlverlauf n entsprechend Figur 1 betrieben, also zwischen den Drehzahlen n0 und - n0 umgeschaltet wird, während die zweite Dreheinrichtung (Twister) RTV wie durch die Klammer angedeutet mit der Drehzahl nv entsprechend Figur 5 die Torsion vornimmt. Letzteres ist möglich, weil der Drehwinkelfehler entsprechend Figur 4 allenfalls im Bereich der Einlegestelle LPV für die Lichtwellenleiter eine Rolle spielt, so daß es in der Regel ausreichend ist, nur diese benachbarte Twisteinrichtung mit dem kompensierenden Drehzahlverlauf nv entsprechend Figur 5 zu betreiben, wobei $\Sigma \Delta n$ für den zweiten Twister RTV größer als für den ersten Twister RBV wird.

Die mit veränderlicher Drehzahl betriebene Dreheinrichtung, im vorliegenden Beispiel also RTV, sollte die längere benachbarte geradlinige Speicherstrecke aufweisen, d.h. den größeren Abstand von der jeweiligen Aufwickel- oder Ablauftrommel.

In diesem Fall entsteht auch zwischen den beiden Dreheinrichtungen RBV und RTV eine gewisse Torsion, die durch nachträgliches Entspannen des Elementes ( = Zurückspringen des Trägerkörpers in eine torsionsfreie Position) mit dazu genutzt werden kann, Überlängen der Lichtwellenleiter bereitzustellen. Zu diesem Zweck ist es zweckmäßig, die zweite Dreheinrichtung RTV möglichst direkt hinter dem Einlegepunkt LW für die Lichtwellenleiter LW1 und LW2 anzuordnen und diese noch an das ungeschützte, das heißt noch nicht mit dem Außenmantel versehenen Trägerkörper TK angreifen zu lassen. Das Aufbringen des Außenmantels erfolgt dann, wie in Figur 1 dargestellt, durch einen nachfolgenden Extruder.

## Patentansprüche

1. Verfahren zur Herstellung eines optischen Kabels (OC), wobei ein Tragkörper (TK) mittels eines Extruders (EX1) auf ein zugfestes Element (TE) aufgebracht und dabei der Tragkörper (TK) mit wendelförmig in wechselnder Richtung mit einem bestimmten Umkehrstellenabstand (a) verlaufenden nach außen offenen Kammern (CA1-CAn) versehen wird und anschließend in diese Kammern an einer Einlegestelle (LP) Lichtwellenleiter (LW1, LW2) eingelegt werden,
   **dadurch gekennzeichnet,**
   daß eine synchrone Drehung um die Längsachse sowohl des zugfesten Elements (TE) vor dem Extruder (EX1) als auch des Tragkörpers (TK) nach der Einlegestelle (LP) durchgeführt wird und
   daß die Lichtwellenleiter (LW1, LW2) dort eingelegt werden, wo vom Ausgang des Extruders (EX1) gerechnet der Abstand bis zur Einlegestelle (LP) der Lichtwellenleiter (LW1, LW2) etwa ein geradzahliges Vielfaches des Umkehrstellenabstandes (a) beträgt, so daß das Einlegen der Lichtwellenleiter (LW) in einem torsionsfreien Bereich erfolgt.

2. Verfahren nach Anspruch 1,
   **dadurch gekennzeichnet,**
   daß die Lichtwellenleiter (LW1, LW2) über räumlich feststehende, nur quer zu ihrer Längsachse schwenkbare Führungsrohre (TB1, TB2) in die jeweiligen Kammern (CA1 - CAn) eingeführt werden.

3. Verfahren nach einem der vorhergehenden Ansprüche,
   **dadurch gekennzeichnet,**
   daß vor dem Einlegen der Lichtwellenleiter (LW1, LW2) eine Abkühlung des Tragkörpers (TK) durchgeführt wird.

4. Verfahren nach einem der vorhergehenden Ansprüche,
   **dadurch gekennzeichnet,**
   daß die Richtungsumkehr im Verlauf der Kammern (CA1 - CAn) nach zwei bis acht Umschlingungen vorgenommen wird.

5. Verfahren nach einem der vorhergehenden Ansprüche,
   **dadurch gekennzeichnet,**
   daß die Drehung um die Längsachse innerhalb einer Drehrichtung mit sich ändernder Drehzahl (n1, n2) vorgenommen wird und
   daß der Drehzahlsprung ( n) für jede Drehrichtungsänderung konstant gehalten wird.

6. Verfahren nach Anspruch 5,
   **dadurch gekennzeichnet,**
   daß die Drehzahl für jede Drehrichtung in gleicher Weise verändert wird.

7. Verfahren nach Anspruch 6,
   **dadurch gekennzeichnet,**
   daß die Drehzahl innerhalb jeder Drehrichtung ansteigt, vorzugsweise etwa linear ansteigt.

8. Verfahren nach einem der Ansprüche 5 bis 7,
   **dadurch gekennzeichnet,**
   daß beide Dreheinrichtungen (RBV und RTV) synchron in ihrer Drehzahl verändert werden.

9. Verfahren nach einem der Ansprüche 5 bis 7,
**dadurch gekennzeichnet,**
daß nur eine der Dreheinrichtungen (z.B. RTV) jeweils in Ihrer Drehzahl (nv) innerhalb einer Drehrichtung verändert wird, während die zweite Dreheinrichtung (RBV) innerhalb jeweils einer Drehrichtung mit konstanter Drehzahl (n) betrieben wird.

10. Verfahren nach Anspruch 9,
**dadurch gekennzeichnet,**
daß die in ihrer Drehzahl (nv) geänderte Dreheinrichtung (RTV) möglichst nahe bei der Einlegestelle (LPV) angeordnet wird.

11. Einrichtung zur Durchführung des Verfahrens nach einem der vorhergehenden Ansprüche,
**dadurch gekennzeichnet,**
daß eine erste Dreheinrichtung (RB) vor dem Extruder (EX1) und eine zweite Dreheinrichtung (RT) nach dem Extruder (EX1) angeordnet ist und
daß der Abstand der Einlegestelle (LP) der Lichtwellenleiter (LW1, LW2) vom Extruder (EX1) gleich einem geradzahligen Vielfachen des Umkehrstellen-Abstandes (a) der Kammern (CA1-CAn) des Tragkörpers (TK) gewählt ist und daß für das Einlegen der Lichtwellenleiter (LW1, LW2) eine feststehende Einlegevorrichtung (EV) vorgesehen ist.

12. Einrichtung nach Anspruch 11,
**dadurch gekennzeichnet,**
daß für die Führung der Lichtwellenleiter Führungsröhrchen (TB1, TB2) vorgesehen sind, die als Tangentialeinführung für die Kammern (CA1 - CAn) dienen.

13. Einrichtung nach Anspruch 12,
**dadurch gekennzeichnet,**
daß die Führungsröhrchen (TB1, TB2) quer zu ihrer Längsachse schwenkbar gelagert sind und so dem Verlauf der Kammern (CA1-CAn) folgen.

14. Einrichtung nach einem der Ansprüche 11 bis 13,
**dadurch gekennzeichnet,**
daß der Abstand zwischen Extruder (EX1) und Einlegestelle (LP) gleich dem zweifachen Umkehrstellenabstand (2a) gewählt ist.

15. Einrichtung nach einem der Ansprüche 11 bis 14,
**dadurch gekennzeichnet,**
daß die Einlegevorrichtung (EV) räumlich feststehend ausgebildet ist.

16. Einrichtung nach einem der Ansprüche 11 bis 15,
**dadurch gekennzeichnet,**
daß nach dem Extruder (EX1) und vor der zweiten Dreheinrichtung (RT) eine Kühleinrichtung (CL1) für den Tragkörper (TK) vorgesehen ist.

**Claims**

1. Method for producing an optical cable (OC), a supporting member (TK) being applied by means of an extruder (EX1) onto a tensile element (TE) and in the process the supporting member (TK) being provided with chambers (CA1-CAn) which are outwardly open and run helically in alternating directions with a specific reversing-point spacing (a) and subsequently optical waveguides (LW1, LW2) are inserted into said chambers at an insertion point (LP), characterized in that a synchro- nized twisting about the longitudinal axis, of both the tensile element (TE), upstream of the extruder (EX1), and the supporting member (TK), downstream of the insertion point (LP), is carried out and in that the optical waveguides (LW1, LW2) are inserted at the point at which, reckoned from the outlet of the extruder (EX1), the distance to the insertion point (LP) of the optical waveguides (LW1, LW2) is approximately an even-numbered multiple of the reversing-point spacing (a), so that the insertion of the optical waveguide (LW) takes place in a torsion-free range.

2. Method according to Claim 1, characterized in that the optical waveguides (LW1, LW2) are introduced into the respective chambers (CA1-CAn) via spatially fixed guide tubes (TB1, TB2) which are only pivotable transversely to their longitudinal axis.

3. Method according to one of the preceding claims, characterized in that, before the insertion of the optical waveguides (LW1, LW2), the supporting member (TK) is cooled.

4. Method according to one of the preceding claims, characterized in that the direction reversal in the course of the chambers (CA1 - CAn) is carried out after two to eight windings.

5. Method according to one of the preceding claims, characterized in that the twisting about the longitudinal axis, within one twist direction, is carried out with a varying twist rate (n1, n2) and in that the change in twist rate (∆n) is kept constant for each change of twist direction.

6. Method according to Claim 5, characterized in that the twist rate is varied in the same manner for each twist direction.

7. Method according to Claim 6, characterized in that the twist rate increases within each twist direc- tion, preferably increases approximately linearly.

8. Method according to one of Claims 5 to 7, characterized in that both twisters (RBV and RTV) are varied synchronously in their twist rate.

9. Method according to one of Claims 5 to 7, charac- terized in that only one of the twisters (for example RTV) is varied in its twist rate (nv) within one twist direction, whilst the second twister (RBV) is operated with constant twist rate (n) within one twist direction in each case.

10. Method according to Claim 9, characterized in that the twister (RTV) varied in its twist speed (nv) is arranged as close as possible to the insertion point (LPV).

11. Device for carrying out the method according to one of the preceding claims, characterized in that a first twister (RB) is arranged upstream of the extruder (EX1) and a second twister (RT) is arranged downstream of the extruder (EX1) and in that the distance of the insertion point (LP) of the optical waveguides (LW1, LW2) from the extruder (EX1) is chosen equal to an integral multiple of the reversal point spacing (a) of the chambers ICA1-CAn) of the supporting member (TK) and in that, for the installation of the optical waveguides (LW1, LW2), a fixed insertion device (EV) is provided.

12. Device according to Claim 11, characterized in that, for guiding the optical waveguides, guide tubes (TB1, TB2) are provided which serve as tangential intro- duction for the chambers (CA1 - CAn).

13. Device according to Claim 12, characterized in that the guide tubes (TB1, TB2) are mounted so as to be pivotable transversely to their longitudinal axis and  thus follow the course of the chambers (CA1-CAn).

14. Device according to one of Claims 11 to 13, characterized in that the distance between the extruder (EX1) and the insertion point (LP) is chosen equal to twice the reversal point spacing (2a).

15. Device according to one of Claims 11 to 14, characterized in that the insertion device (EV) is designed so as to be spatially fixed.

16. Device according to one of Claims 11 to 15, characterized in that, downstream of the extruder (EX1) and upstream of the second twister (RT), a cooling device (CL1) for the supporting member (TK) is provided.

**Revendications**

1. Procédé pour fabriquer un câble optique (OC), selon lequel on applique un corps de support (TK) au moyen d'une extrudeuse (EX1) sur un élément (TE) résistant à la traction et on équipe le corps de support (TK) de chambres ouvertes vers l'extérieur (CA1 - CAn), qui s'étendent selon une disposition hélicoïdale dans des directions alternées avec une distance déterminée (a) entre les points d'inversion, et ensuite on insère des guides d'ondes lumineuses (LW1, LW2) dans ces chambres en un emplacement d'insertion (LP),
caractérisé par le fait
qu'on entraîne autour de l'axe longitudinal, selon une rotation synchrone, aussi bien l'élément (TE) résistant à la traction, en amont de l'extrudeuse (EX1), que le corps de support (TK), en aval du point d'insertion (LP), et
qu'on insère les guides d'ondes lumineuses (LW1, LW2) à l'endroit où la distance,
calculée à partir de la sortie de l'extrudeuse (EX1), jusqu'a point d'insertion (LP) des guides d'ondes lumineuses (LW1, LW2) est égale approximativement à un multiple pair de la distance (a) des points d'inversion, de sorte que l'insertion des guides d'ondes lumineuses (LW) s'effectue dans une zone exempte de torsion.

2. Procédé suivant la revendication 1, caractérisé par le fait que les guides d'ondes lumineuses (LW1, LW2) sont introduits dans les chambres respectives (CA1 - CAI) par l'intermédiaire de tubes de guidage (TB1, TB2), qui sont fixes dans l'espace et peuvent pivoter uniquement transversalement par rapport à leur axe longitudinal.

3. Procédé suivant l'une des revendications précédentes, caractérisé par le fait qu'on exécute un refroidissement du corps de support (TK) avant l'insertion des guides d'ondes lumineuses (LW1, LW2).

4. Procédé suivant l'une des revendications précédentes, caractérisé par le fait que l'inversion de sens est exécutée sur l'étendue des chambres (CA1 - CAn), au bout de deux à huit enroulements.

5. Procédé suivant l'une des revendications précédentes, caractérisé par le fait
que la rotation autour de l'axe longitudinal est exécutée dans un sens de rotation avec une vitesse de rotation variable (n1, n2), et
que la variation brusque ( n) de la vitesse de rotation est maintenue constante pour chaque changement du sens de rotation.

6. Procédé suivant la revendication 5, caractérisé par le fait qu'on modifie la vitesse de rotation de la même manière pour chaque sens de rotation.

7. Procédé suivant la revendication 6, caractérisé par le fait que la vitesse de rotation augmente pour chaque sens de rotation, de préférence d'une manière approximativement linéaire.

8. Procédé suivant l'une des revendications 5 à 7, caractérisé par le fait que les vitesses de rotation des deux dispositifs de rotation (RBV et RTV) sont modifiées en synchronisme.

9. Procédé suivant l'une des revendications 5 à 7, caractérisé par le fait que la vitesse de rotation (nv) d'un seul des dispositifs de rotation (par exemple RTV) est modifiée dans un sens de rotation, tandis que le second dispositif de rotation (RBV) fonctionne, respectivement dans un sens de rotation, avec une vitesse de rotation (n) constante.

10. Procédé suivant la revendication 9, caractérisé par le fait que le dispositif de rotation (RTV), dont la vitesse de rotation (nv) est modifiée, est disposé aussi près que possible du point d'insertion (LPV).

11. Dispositif pour la mise en oeuvre du procédé suivant l'une des revendications précédentes, caractérisé par le fait
qu'un premier dispositif de rotation (RB) est disposé en amont de l'extrudeuse (EX1) et un second dispositif de rotation (RT) est disposé en aval de l'extrudeuse (EX1),
que la distance entre le point d'insertion (LP) des guides d'ondes lumineuses (LW1, LW2) et l'extrudeuse (EX1) est choisie égale à un multiple pair de la distance (a) des points d'inversion des chambres (CA1 - CAn) du corps de support (CK), et que pour l'insertion des guides d'ondes lumineuses (LW1, LW2), il est prévu un dispositif d'insertion fixe (EV).

12. Dispositif suivant la revendication 1, caractérisé par le fait que pour le guidage des guides d'ondes lumineuses, il est prévu des petits tubes de guidage (TB1, TB2), qui sont utilisés en tant que système de guidage d'introduction tangentielle pour les chambres (CA1 - CAn).

13. Dispositif suivant la revendication 12, caractérisé par le fait que les petits tubes de guidage (TB1, TB2) sont montés de manière à pouvoir pivoter transversalement par rapport à leur axe longitudinal et suivent ainsi la configuration des chambres (CA1 - CAn).

14. Dispositif suivant l'une des revendications 11 à 13, caractérisé par le fait que la distance entre l'extrudeuse (EX1) et le point d'insertion (LP) est choisie égale au double (2a) de la distance entre les points d'inversion.

15. Dispositif suivant l'une des revendications 11 à 14, caractérisé par le fait que le dispositif d'insertion (EV) est réalisé de manière à être fixe dans l'espace.

16. Dispositif suivant l'une des revendications 11 à 15, caractérisé par le fait qu'un dispositif de refroidissement (CL1) pour le corps de support (TK) est prévu en aval de l'extrudeuse (EX1) et en amont du second dispositif d'entraînement en rotation (RT).

FIG 1

FIG 2

## FIG 3

## FIG 4

## FIG 5

## FIG 6